# EUROPEAN PATENT SPECIFICATION

(11) **EP 4 442 487 B1**
(45) Date of publication and mention of the grant of the patent: **08.04.2026**
(21) Application number: 22900622.6
(22) Date of filing: 01.12.2022
(51) Int. Cl.: H01R 13/405, B60L 53/16, H01R 13/04, H01R 13/10, H01R 13/502

(54) **INTEGRAL BRACKET AND TERMINAL AND CHARGING DEVICE**
INTEGRIERTE KLAMMER UND ENDGERÄT SOWIE LADEVORRICHTUNG
SUPPORT INTÉGRAL ET TERMINAL ET DISPOSITIF DE CHARGE

(30) Priority: 01.12.2021 CN 202122998252 U
(43) Date of publication of application: 09.10.2024
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Dehns
(86) International application number: PCT/CN2022/135914
(87) International publication number: WO 2023/098818

(56) References cited:
- CN-A- 110 492 300
- CN-A- 110 492 335
- CN-A- 111 129 910
- CN-U- 202 855 998
- CN-U- 204 615 060
- CN-U- 205 646 254
- CN-U- 207 725 239
- CN-U- 210 897 739
- CN-U- 211 480 398
- CN-U- 214 754 308
- CN-U- 216 698 819
- CN-Y- 2 699 509
- US-A1- 2006 019 537
- US-B2- 6 688 922
- US-B2- 7 118 425

## Description

### RELATED DISCLOSURE

This disclosure claims priority of Chinese Patent Application No. 202122998252.6, filed on December 1, 2021.

### TECHNICAL FIELD

The present disclosure relates to the field of charging technologies, and more specifically to a bracket integrated with a terminal, and a charging device.

### BACKGROUND

At present, new energy batteries used in new energy vehicles are all charged using charging systems. In the structure of an exist charging system, a terminal is fixed on a bracket in a limiting manner of clamping. Generally, a plurality of terminals need to be manually fixed in a terminal bracket. Such mounting is difficult for operators, resulting in low yield. Moreover, high production cost results from a large number of parts.

In addition, there are mounting gaps between the terminals and the terminal bracket in such mounting. After the charging system is used for multiple times, the terminals shake without stop due to repeated plugging and unplugging, such that the gaps between the terminals and the terminal bracket are increasingly expanded, and eventually the terminals move or separate from the bracket and cannot implement the plug-in function, resulting in failure of the charging system. A terminal structure of a power plug is known from the prior art, for example from CN2699509Y. An assembly-free fakra connector is known from the prior art, for example from CN210897739U. A manufacturing method for power terminal of compressor driver and power terminal are known from the prior art, for example from CN111129910A. A connector socket, an on-board device, and a vehicle are known from the prior art, for example from CN110492300A. A plug connector is known from the prior art, for example from US6688922B2. A socket structure and method for forming the same are known from the prior art, for example from US7118425B2.

Therefore, a terminal bracket which is less difficult to assemble, low in cost, and firm and durable is urgently needed in this field.

### SUMMARY

The present invention is defined by the independent claims. Further embodiments are set forth in the dependent claims. Any references to inventions or embodiments not falling within the scope of the independent claims are to be interpreted as examples useful for understanding the invention. The present disclosure provides a bracket integrated with a terminal, and a charging device. The terminal and the bracket are integrally formed in an integral injection molding manner, such that the low assembly difficulty and the low production cost are achieved, and the produced bracket integrated with the terminal is firm and durable.

The technical solutions provided by the present disclosure are as follows.

In a first aspect, an embodiment of the present disclosure provides a bracket integrated with a terminal, including a bracket and at least one terminal, where an anti-rotation portion is disposed on the terminal and includes a first groove and/or a protrusion disposed on a side surface of the terminal, and the bracket is formed on at least part of the anti-rotation portion in an integral injection molding manner.

In a second aspect, an embodiment of the present disclosure provides a charging device, including the bracket integrated with a terminal according to the embodiment in the first aspect.

The present disclosure has the following characteristics and advantages:
1. According to the bracket integrated with the terminal provided by the present disclosure, the terminal and the bracket are integrally formed in an integral injection molding manner, such that a process of manually plugging the terminal into the bracket is omitted, and not only the yield can be improved, but also the labor costs can be reduced.
2. According to the bracket integrated with the terminal provided by the present disclosure, the terminal and the bracket are integrally formed in an integral injection molding manner, and there are few parts, such that an assembly procedure is simplified during assembly.
3. According to the bracket integrated with the terminal provided by the present disclosure, the anti-rotation portion is disposed on the terminal to limit axial or radial movement of the terminal on the bracket, such that the terminal is more firmly combined with the bracket. During practical application, even after multiple times of plugging and unplugging, the terminal is not prone to moving or falling off, thereby avoiding failure of a charging system.

### BRIEF DESCRIPTION OF THE DRAWINGS

To more clearly illustrate the technical solutions in the embodiments of the present disclosure, the accompanying drawings that need to be used in the embodiments will be briefly described below. Apparently, the accompanying drawings in the description below merely illustrate some embodiments of the present disclosure. Those of ordinary skill in the art may also derive other accompanying drawings from these accompanying drawings without creative efforts.
FIG. 1 is a schematic structural diagram of a bracket integrated with a terminal according to an embodiment of the present disclosure;
FIG. 2 is a schematic positional diagram of a stop ring in a bracket integrated with a terminal according to an embodiment of the present disclosure; and
FIG. 3 is a schematic diagram of a terminal in a bracket integrated with a terminal according to an embodiment of the present disclosure.

### DETAILED DESCRIPTION

Various exemplary embodiments of the present disclosure are now described in detail with reference to the accompanying drawings. It is to be noted that the relative arrangement of components and steps, numerical expressions, and values set forth in these embodiments do not limit the scope of the present disclosure, unless otherwise specifically stated.

The following description of at least one exemplary embodiment is merely illustrative in fact and never constitutes any limitation on the present disclosure and disclosure or use thereof.

Techniques, methods and devices known to those of ordinary skill in the related art may not be discussed in detail, but should be regarded as a part of the specification in appropriate cases.

In all the examples shown and discussed herein, any specific value should be interpreted as merely illustrative and not as a limitation. Therefore, other examples of exemplary embodiments may have different values.

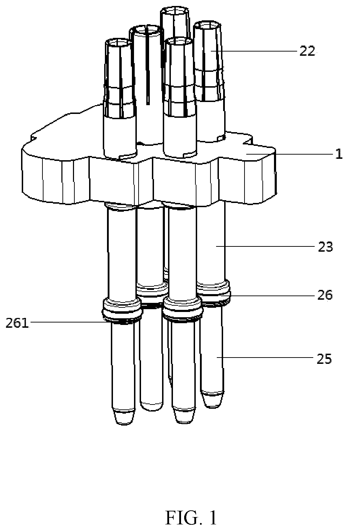

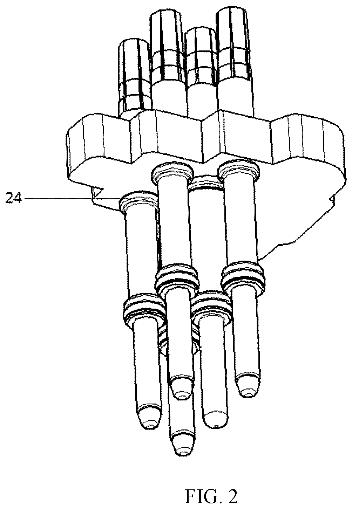

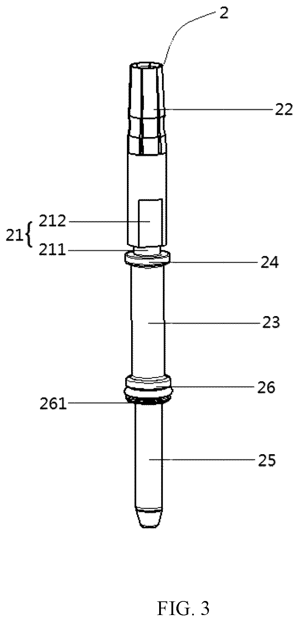

In an embodiment, as shown in FIG. 1, FIG. 2, and FIG. 3, a bracket integrated with a terminal includes a bracket 1 and at least one terminal 2, where an anti-rotation portion 21 is disposed on the terminal 2, the anti-rotation portion 21 includes a first groove 211 and/or a protrusion disposed on a side surface of the terminal, and the bracket 1 is formed integrally injection-molded on at least part of the anti-rotation portion 21. In an exemplary embodiment, the first groove 211 and/or the protrusion are/is disposed on the side surface of the terminal 2 along a radial direction of the terminal 2.

The anti-rotation portion 21 is disposed to prevent movement of the terminal 2 on the bracket 1, including both axial movement and radial movement. In the prior art, an operator manually inserts the terminal 2 into the bracket 1 one by one. In actual use of a structure processed in this way, the terminals 2 on the bracket 1 will be loose after the terminals 2 are plugged into or unplugged from plug-in terminals for multiple times. In severe cases, the terminal 2 will fall off the bracket 1, resulting in failure of a charging device as a whole.

The anti-rotation portion 21 and the terminal 2 are integrally formed without additional processing, which will not increase the difficulty of a production process. The anti-rotation portion 21 may only be a protrusion, a groove, or a combination of the protrusion and the groove. When formed integrally injection-molded with the bracket 1, an injection molding material wraps the protrusion or fills the groove to form a clamping structure. The terminal 2 and the bracket 1 combined together in this way are very firm, and even if the terminal 2 will not be loose after being plugged into or unplugged from the plug-in terminal for multiple times.

The bracket 1 includes opposite end surfaces and side surfaces connected to the end surfaces, at least one through hole is formed on the end surface of the bracket 1, and at least part of the anti-rotation portion 21 is disposed in the through hole. In actual production, the number of through holes on the bracket 1 matches with the number of terminals. During injection molding, the through holes with the same number as the terminals will be formed on the bracket 1. An outer surface of the anti-rotation portion 21 may be entirely or only partially included in the through hole.

In this embodiment, a percentage of a total area of a cross section of the anti-rotation portion in an area of one of the end surfaces of the bracket 1 is 1%-66%. In practical application, the more the terminals 2 are carried by the bracket 1, or the larger the diameter of the carried terminals is, the fewer the parts of the bracket 1 connected to the terminals 2 are.

Specifically, the larger the cross section of the anti-rotation portion 21 on the terminal 2 is, the smaller the area occupied by the injection molded part of the bracket 1 is. When the percentage of the cross section in the area reaches a certain value, although the bracket 1 can be connected to the terminals 2, it is already quite fragile and may be damaged due to vibration at any time in actual work. If the set number or diameter of terminals 2 is too small, that is, the area of the anti-rotation portion 21 on the bracket is too small, then the bracket 1 occupies a large working area and cannot play its due role, which is also inappropriate. Therefore, the inventor selects the same brackets 1 and terminals 2 with different total cross-sectional areas of anti-rotation portions 21 for testing, and divides them into eleven groups for verifying the strength of the bracket 1 under different percentages of the total cross-sectional areas of the anti-rotation portions 21 in the area of one end surface of the bracket 1.

In a strength test method, the brackets integrated with the terminals make free fall motion from a height of 2 m, and it is observed whether the bracket 1 is damaged when falling to the ground after each group falls to the ground. If damage occurs, it is unqualified. Test results are as shown in Table 1.

**Table 1: Influence of percentage of total area of cross section of anti-rotation portion of terminal in area of one end surface of bracket on strength of bracket**

| | | | | | | | | | | | |
|---|---|---|---|---|---|---|---|---|---|---|---|
| Percentage (%) | 1 | 8 | 25 | 39 | 47 | 50 | 57 | 62 | 66 | 70 | 73 |
| Whether bracket is damaged | Not | Not | Not | Not | Not | Not | Not | Not | Not | Yes | Yes |

It can be seen from Table 1 that when the percentage of the total area of the cross section of the anti-rotation portion 21 in the area of one of the end surfaces of the bracket 1 is 1%-66%, the brackets integrated with the terminals are all not damaged when falling off from the height of 2 m, and when the percentage of the total area of the cross section of the anti-rotation portion 21 in the area of one of the end surfaces of the bracket 1 is greater than 66%, the bracket 1 is damaged when falling off from the height of 2 m. When the percentage of the total area of the cross section of the anti-rotation portion 21 in the area of one of the end surfaces of the bracket 1 is less than 1%, the area of the anti-rotation portion 21 on the bracket is too small, such that the bracket 1 occupies a large working area and cannot play its due role. Therefore, the inventor selects the percentage of the total area of the cross section of the anti-rotation portion 21 in the area of one end surface of the bracket 1 to be 1%-66%.

In an exemplary embodiment, the anti-rotation portion 21 further includes an auxiliary surface 212, where the auxiliary surface 212 is a non-circular plane, a curved surface, or a folded surface disposed on the side surface of the terminal 2, and the auxiliary surface 212 is located on the side surface of the terminal 2. The auxiliary surface 212 may be directly processed on the terminal 2 by means of a process such as stamping, milling, or forging. The cross section of the anti-rotation portion 21 with the auxiliary surface 212 is non-circular, such that the terminal 2 and the bracket 1 are combined more firmly, and the terminal 2 is not prone to rotation during actual use.

In this embodiment, a percentage of a surface area of the auxiliary surface 212 in a total contact area between the anti-rotation portion 21 and the bracket 1 is 10%-100%. The larger the surface area of the auxiliary surface 212 is, the better the anti-rotation effect is. When the percentage of the surface area of the auxiliary surface 212 in the contact area between the terminal 2 and the bracket 1 is 100%, it indicates that the anti-rotation portion 21 has a plurality of auxiliary surfaces 212, that is, the section of the anti-rotation portion 21 does not have a circular arc shape, such as a triangular shape, a square shape, or a polygonal shape. However, the plurality of auxiliary surfaces 212 mean complex cutting and require high processing costs, and when the auxiliary surface 212 is too small, the anti-rotation effect is not up to standard. In order to find a suitable percentage of the surface area of the auxiliary surface 212 in the contact area between the anti-rotation portion 21 and the bracket 1, the inventor selects the same terminals 2 for testing, where each terminal 2 has different auxiliary surfaces 212, and the brackets selected in test of each group also have the same features.

During the test process, the brackets 1 are formed on the terminals 2 with different auxiliary surfaces 212 in an integral injection molding manner, they are divided into twelve groups, then the same axial rotational force of 600 N is applied to the terminal 2 in each group, and when the terminal 2 rotates, it is unqualified. Test results are as shown in Table 2.

**Table 2: Influence of percentage of surface area of auxiliary surface in contact area between anti-rotation portion and bracket on anti-rotation capability**

| | | | | | | | | | | | | |
|---|---|---|---|---|---|---|---|---|---|---|---|---|
| Percentage (%) | 6 | 8 | 10 | 20 | 30 | 40 | 50 | 60 | 70 | 80 | 90 | 100 |
| Whether terminal rotates | Yes | Yes | Not | Not | Not | Not | Not | Not | Not | Not | Not | Not |

It can be seen from Table 2 that when the percentage of the surface area of the auxiliary surface 212 in the contact area between the anti-rotation portion 21 and the bracket 1 is 10%-100%, the terminal 2 does not rotate when the axial rotational force is applied to the terminal 2, and when the percentage is less than 10%, the terminal 2 rotates. Therefore, the inventor selects the percentage of the surface area of the auxiliary surface 212 in the contact area between the anti-rotation portion 21 and the bracket 1 to be 10%-100%.

The terminal 2 is connected to a cable to implement current conduction, and the terminal further includes a connection portion 22, where the connection portion 22 has one end connected to one end of the anti-rotation portion 21 and the other end connected to a conductive portion of the cable. The connection portion 22 and the anti-rotation portion 21 may be integrally formed or produced separately according to actual requirements. During practical application, the connection portion is welded with the terminal free of the connection portion 22 according to different situations. The welding includes one or more of resistance welding, friction welding, ultrasonic welding, arc welding, laser welding, electron beam welding, pressure diffusion welding, and magnetic induction welding. A material of the connection portion 22 may also be diversely produced according to actual requirements, and the material may be copper or copper alloy, or aluminum or aluminum alloy. The connection portion 22 is connected to the cable by means of crimping or welding. The welding includes one or more of resistance welding, friction welding, ultrasonic welding, arc welding, laser welding, electron beam welding, pressure diffusion welding, and magnetic induction welding.

The terminal 2 further includes an extension portion 23, where one end of the extension portion 23 is connected to one end of the anti-rotation portion away from the connection portion, the anti-rotation portion 21 is partially or entirely fixed in the bracket 1, and when the bracket 1 is used as a symmetrical surface, the connection portion 22 is located on one side of the bracket 1, and the extension portion 23 is located on the other side of the bracket 1. The extension portion 23 is mainly configured to increase the length of the terminal 2. During actual assembly, the extension portion 23 may be connected to a circuit board of a charging device.

In an exemplary embodiment, the terminal 2 further includes a stop ring 24, where the stop ring 24 is a peripheral protrusion disposed at one end of the extension portion 23 close to the bracket 1. The peripheral protrusion and the terminal may be integrally formed and processed during actual production. In this way, the stop ring 24 and the terminal 2 are made of the same material. Alternatively, the stop ring and the bracket 1 are together formed on the terminal 2 in an injection molding manner when the bracket 1 is formed on the terminal 2 in an injection molding manner. In this way, the stop ring 24 and the bracket 1 are made of the same material. The stop ring 24 is disposed to further fix the terminal 2 on the bracket 1, thereby preventing the terminal 2 from separating from the bracket 1 due to frequent plugging and unplugging in subsequent use.

A part of the terminal 2 away from the cable is connected to a electrical device to conduct a current into the electrical device, and the terminal 2 further includes a contact portion 25, where one end of the contact portion 25 is connected to one end of the extension portion 23 away from the anti-rotation portion 22, and the terminal is configured to be plugged with a plug-in terminal on the electrical device. The contact portion 25 and the terminal 2 may be integrally formed or produced separately according to actual requirements. During practical application, the contact portion is welded with the terminal free of the contact portion 25 according to different situations. The welding includes one or more of resistance welding, friction welding, ultrasonic welding, arc welding, laser welding, electron beam welding, pressure diffusion welding, and magnetic induction welding. A material of the contact portion 25 may also be diversely produced according to actual requirements, and the material may be copper or copper alloy, or aluminum or aluminum alloy.

A fixing portion 26 is disposed between the contact portion 25 and the extension portion 23, the fixing portion 26 protrudes out of the side surface of the terminal 2, and the fixing portion 26 is disposed to position the terminal 2 during actual use or enable the terminal 2 to be more firmly combined with a circuit board in the electrical device or another electrical device.

Further, a second groove may be formed on the fixing portion 26, and a sealing ring 261 may be disposed in the second groove. Further, the sealing ring 261 and the bracket 1 are integrally processed and formed with the terminal 2 in a 2K (two-component) injection molding manner.

The present disclosure further provides a charging device, including the above bracket 1 integrated with a terminal 2. The charging device mounted with the bracket 1 described herein will have better stability.

While some specific embodiments of the present disclosure have been described in detail by way of examples, it is to be understood by those skilled in the art that the above examples are illustrative only and are not intended to limit the scope of the present disclosure. It is to be understood by those skilled in the art that the above embodiments may be modified without departing from the scope of the present disclosure. The scope of the present disclosure is limited by the appended claims.

## Claims

1. A bracket integrated with a terminal, comprising a bracket (1) and at least one terminal (2), wherein an anti-rotation portion (21) is disposed on the terminal (2) and comprises a first groove (211) and/or a protrusion disposed on a side surface of the terminal (2), and the bracket (1) is formed integrally injection-molded on at least part of the anti-rotation portion (21),
wherein the terminal (2) is connectable to a cable to implement current conduction, and the terminal (2) further comprises a connection portion (22) with one end connected to one end of the anti-rotation portion (21) and the other end connectable to a conductive portion of the cable, wherein the terminal (2) further comprises an extension portion (23) with one end connected to one end of the anti-rotation portion (21) away from the connection portion (22),
wherein a part of the terminal (2) away from the cable is connectable to an electrical device to conduct a current into the electrical device, and the terminal (2) further comprises a contact portion (25) with one end connected to one end of the extension portion (23) away from the anti-rotation portion (21) and is configured to be plugged with a plug-in terminal on the electrical device,
**characterized in that**
a fixing portion (26) is disposed between the contact portion (25) and the extension portion (23), protrudes out of the side surface of the terminal (2), and is configured to position the terminal (2).

2. The bracket integrated with a terminal according to claim 1, wherein the bracket (1) comprises opposite end surfaces and side surfaces connected to the end surfaces, at least one through hole is formed on the end surface of the bracket (1), and at least part of the anti-rotation portion (21) is disposed in the through hole.

3. The bracket integrated with a terminal according to claim 2, wherein a percentage of a total area of a cross section of the anti-rotation portion (21) in an area of one of the end surfaces of the bracket (1) is 1%-66%.

4. The bracket integrated with a terminal according to claim 1, wherein the first groove (211) and/or the protrusion are/is disposed on the side surface of the terminal (2) along a radial direction of the terminal (2).

5. The bracket integrated with a terminal according to claim 1, wherein the anti-rotation portion (21) further comprises an auxiliary surface (212) which is a non-circular plane or a curved surface, or a folded surface disposed on the side surface of the terminal (2).

6. The bracket integrated with a terminal according to claim 5, wherein a percentage of a surface area of the auxiliary surface (212) in a total contact area between the anti-rotation portion (21) and the bracket (1) is 10%-100%.

7. The bracket integrated with a terminal according to claim 1, wherein the terminal (2) further comprises a stop ring (24) which is a peripheral protrusion disposed at one end of the extension portion close to the bracket (1).

8. The bracket integrated with a terminal according to claim 1, wherein a second groove is formed on the fixing portion (26), a sealing ring (261) is disposed in the second groove, and the sealing ring (261) and the bracket (1) are integrally processed and formed in a 2K, two-componen, injection molding manner.

9. A charging device, comprising the bracket integrated with a terminal according to any one of claims 1 to 8.

## Patentansprüche

1. Klammer, die mit einem Endgerät integriert ist, umfassend eine Klammer (1) und mindestens ein Endgerät (2),
wobei ein Bewegungsverhinderungsabschnitt (21) am Endgerät (2) angeordnet ist und eine erste Nut (211) und/oder einen Vorsprung umfasst, der an einer Seitenfläche des Endgeräts (2) angeordnet ist, und die Klammer (1) einstückig an mindestens einem Teil des Bewegungsverhinderungsabschnitts (21) spritzgegossen ist,
wobei das Endgerät (2) mit einem Kabel verbindbar ist, um einen Stromfluss zu implementieren, und das Endgerät (2) weiter einen Verbindungsabschnitt (22) umfasst, bei dem ein Ende mit einem Ende des Bewegungsverhinderungsabschnitts (21) verbunden ist und das andere Ende mit einem leitenden Abschnitt des Kabels verbindbar ist;
wobei das Endgerät (2) weiter einen Verlängerungsabschnitt (23) umfasst, bei dem ein Ende mit einem Ende des Bewegungsverhinderungsabschnitts (21) beabstandet vom Verbindungsabschnitt (22) verbunden ist,
wobei ein Teil des Endgeräts (2) beabstandet vom Kabel mit einer elektrischen Vorrichtung verbindbar ist, um
einen Strom in die elektrische Vorrichtung zu leiten, und das Endgerät (2) weiter einen Kontaktabschnitt (25) umfasst, bei dem ein Ende mit einem Ende des Verlängerungsabschnitts (23) beabstandet vom Bewegungsverhinderungsabschnitt (21) verbunden ist und der konfiguriert ist, um an ein Plug-in-Endgerät an der elektrischen Vorrichtung angeschlossen zu werden, **dadurch gekennzeichnet, dass**
ein Befestigungsabschnitt (26), der zwischen dem Kontaktabschnitt (25) und dem Verlängerungsabschnitt (23) angeordnet ist, aus der Seitenfläche des Endgeräts (2) hervorragt und konfiguriert ist, um das Endgerät (2) zu positionieren.

2. Klammer, die mit einem Endgerät integriert ist, nach Anspruch 1, wobei die Klammer (1) gegenüberliegende Endflächen und Seitenflächen, die mit den Endflächen verbunden sind, umfasst, wobei mindestens ein Durchgangsloch an der Endfläche der Klammer (1) gebildet ist, und mindestens ein Teil des Bewegungsverhinderungsabschnitts (21) im Durchgangsloch angeordnet ist.

3. Klammer, die mit einem Endgerät integriert ist, nach Anspruch 2, wobei ein Prozentsatz eines Gesamtbereichs eines Querschnitts des Bewegungsverhinderungsabschnitts (21) in einem Bereich einer der Endflächen der Klammer (1) 1%-66% beträgt.

4. Klammer, die mit einem Endgerät integriert ist, nach Anspruch 1, wobei die erste Nut (211) und/oder der Vorsprung an der Seitenfläche des Endgeräts (2) entlang einer radialen Richtung des Endgeräts (2) angeordnet sind/ist.

5. Klammer, die mit einem Endgerät integriert ist, nach Anspruch 1, wobei der Bewegungsverhinderungsabschnitt (21) weiter eine Hilfsfläche (212) umfasst, die eine nichtrunde Ebene oder eine gekrümmte Fläche oder eine auf der Seitenfläche des Endgeräts (2) angeordnete gefaltete Fläche ist.

6. Klammer, die mit einem Endgerät integriert ist, nach Anspruch 5, wobei ein Prozentsatz des Oberflächenbereichs der Hilfsfläche (212) in einem Gesamtkontaktbereich zwischen dem Bewegungsverhinderungsabschnitt (21) und der Klammer (1) 10%-100% beträgt.

7. Klammer, die mit einem Endgerät integriert ist, nach Anspruch 1, wobei das Endgerät (2) weiter einen Anschlagring (24) umfasst, der ein Umfangsvorsprung ist, der an einem Ende des Verlängerungsabschnitts in der Nähe der Klammer (1) angeordnet ist,

8. Klammer, die mit einem Endgerät integriert ist, nach Anspruch 1, wobei eine zweite Nut am Befestigungsabschnitt (26) gebildet ist, ein Dichtungsring (261) in der zweiten Nut angeordnet ist und der Dichtungsring (261) und die Klammer (1) einstückig in einer 2K-, Zwei-Komponenten-Spritzgießvorgehensweise verarbeitet und gebildet sind.

9. Ladevorrichtung, die die Klammer, die mit einem Endgerät integriert ist, nach einem der Ansprüche 1 bis 8 umfasst.

## Revendications

1. Support intégré à une borne, comprenant un support (1) et au moins une borne (2),
dans lequel une partie anti-rotation (21) est disposée sur la borne (2) et comprend une première rainure (211) et/ou une saillie disposée sur une surface latérale de la borne (2), et le support (1) est formé moulé par injection d'un seul tenant sur au moins une partie de la partie anti-rotation (21),
dans lequel la borne (2) peut être connectée à un câble pour mettre en œuvre une conduction de courant, et la borne (2) comprend en outre une partie de connexion (22) avec une extrémité connectée à une extrémité de la partie anti-rotation (21) et l'autre extrémité pouvant être connectée à une partie conductrice du câble,
dans lequel la borne (2) comprend en outre une partie d'extension (23) avec une extrémité connectée à une extrémité de la partie anti-rotation (21) à l'opposé de la partie de connexion (22),
dans lequel une partie de la borne (2) à l'opposé du câble peut être connectée à un dispositif électrique pour
conduire un courant dans le dispositif électrique, et la borne (2) comprend en outre une partie de contact (25) avec une extrémité connectée à une extrémité de la partie d'extension (23) à l'opposé de la partie anti-rotation (21) et est configurée pour être enfichée avec une borne enfichable sur le dispositif électrique, **caractérisé en ce que**
une partie de fixation (26) est disposée entre la partie de contact (25) et la partie d'extension (23), fait saillie hors de la surface latérale de la borne (2), et est configurée pour positionner la borne (2).

2. Support intégré à une borne selon la revendication 1, dans lequel le support (1) comprend des surfaces d'extrémité opposées et des surfaces latérales reliées aux surfaces d'extrémité, au moins un trou traversant est formé sur la surface d'extrémité du support (1), et au moins une partie de la partie anti-rotation (21) est disposée dans le trou traversant.

3. Support intégré à une borne selon la revendication 2, dans lequel un pourcentage d'une superficie totale d'une section transversale de la partie anti-rotation (21) dans une zone de l'une des surfaces d'extrémité du support (1) est de 1 % à 66 %.

4. Support intégré à une borne selon la revendication 1, dans lequel la première rainure (211) et/ou la saillie est/sont disposée(s) sur la surface latérale de la borne (2) le long d'une direction radiale de la borne (2).

5. Support intégré à une borne selon la revendication 1, dans lequel la partie anti-rotation (21) comprend en outre une surface auxiliaire (212) qui est un plan non circulaire ou une surface incurvée, ou une surface pliée disposée sur la surface latérale de la borne (2).

6. Support intégré à une borne selon la revendication 5, dans lequel un pourcentage d'une superficie de la surface auxiliaire (212) dans une zone de contact totale entre la partie anti-rotation (21) et le support (1) est de 10 % à 100 %.

7. Support intégré à une borne selon la revendication 1, dans lequel la borne (2) comprend en outre une bague d'arrêt (24) qui est une saillie périphérique disposée à une extrémité de la partie d'extension à proximité du support (1).

8. Support intégré à une borne selon la revendication 1, dans lequel une seconde rainure est formée sur la partie de fixation (26), une bague d'étanchéité (261) est disposée dans la seconde rainure, et la bague d'étanchéité (261) et le support (1) sont traités et formés d'un seul tenant selon une méthode de moulage par injection à deux composants, 2K.

9. Dispositif de charge, comprenant le support intégré à une borne selon l'une quelconque des revendications 1 à 8.
